# EUROPEAN PATENT APPLICATION

(11) **EP 4 745 204 A1**
(43) Date of publication of application: **20.05.2026**
(21) Application number: 25214812.7
(22) Date of filing: 11.11.2025
(51) Int. Cl.: C09D 11/30, C09D 11/322, C09D 11/324

(54) **INKJET INK**

(30) Priority: 15.11.2024 JP 2024199771
(71) Applicant: KYOCERA Document Solutions Inc., Osaka-shi, Osaka 540-8585 (JP)
(72) Inventor: KOYAMA, Akinori, Osaka-shi, Osaka, 540-8585 (JP)
(74) Representative: Viering, Jentschura & Partner mbB Patent- und Rechtsanwälte

(57) **Abstract**

An inkjet ink includes: a pigment; a pigment coating resin; a hydrophobic solvent having a Log P of 0.03 or more and 0.51 or less; and water. In the inkjet ink, a ratio of a content of the pigment coating resin to a content of the pigment is 8.0 mass% or more and 12 mass% or less. In the inkjet ink, a content of the hydrophobic solvent is 10 mass% or more and 30 mass% or less. In the inkjet ink, a pigment dispersion that includes the pigment and the pigment coating resin has an average particle diameter of 618 nm or more when diluted 100-fold by mass with a mixed solution of 50 parts by mass of the hydrophobic solvent and 50 parts by mass of water.

## Description

### Field

The present disclosure relates to an inkjet ink.

### Background

Japanese Patent No. 6988567 and Japanese Patent No. 6051839 disclose inkjet inks including pigments. The pigments included in the inkjet inks include self-dispersing pigments that disperse alone in a solvent and resin-dispersed pigments that are coated with a resin and disperse in the solvent via the resin. The resin-dispersed pigments are less likely to agglomerate during preservation than the self-dispersing pigments because they exert steric repulsion in the solvent. For this reason, the resin-dispersed pigments allow high preservation stability to be easily achieved. Meanwhile, the resin-dispersed pigments are also less likely to agglomerate than the self-dispersing pigment on a recording medium because they exert steric repulsion in the solvent even after impact on the recording medium when forming an image. For this reason, the resin-dispersed pigments easily penetrate into the fiber with the solvent, which easily impairs image density.

### Summary

According to an embodiment of the present disclosure, there is provided an inkjet ink, including: a pigment; a pigment coating resin; a hydrophobic solvent having a Log P of 0.03 or more and 0.51 or less; and water.

In the inkjet ink, a ratio of a content of the pigment coating resin to a content of the pigment is 8.0 mass% or more and 12 mass% or less.

In the inkjet ink, a content of the hydrophobic solvent is 10 mass% or more and 30 mass% or less.

A pigment dispersion that includes the pigment and the pigment coating resin has an average particle diameter of 618 nm or more when diluted 100-fold by mass with a mixed solution of 50 parts by mass of the hydrophobic solvent and 50 parts by mass of water.

### Detailed Description

In the inkjet inks disclosed in Japanese Patent No. 6988567 and Japanese Patent No. 6051839, a new solid component is blended in the configuration using the resin-dispersed pigment in order to enhance the agglomeration of pigments on the recording medium. However, blending a new solid component in the ink increase production costs and tends to impair the ejection stability at the recording head.

In view of the circumstances as described above, it is an object of the present disclosure to provide an inkjet ink capable of achieving both image density and preservation stability.

An embodiment of the present disclosure will be described. Note that in the present disclosure, "acrylic" and "methacrylic" will be collectively referred to as "(meth)acrylic", i.e., "(meth)acrylic" includes both "acrylic" and "methacrylic".

### [Configuration of inkjet ink]

### (Schematic configuration)

An inkjet ink according to an embodiment of the present disclosure (hereinafter, also referred to simply as an "ink") includes a pigment, a pigment coating resin, a hydrophobic solvent, and water. The ink according to this embodiment is a water-based ink that is ejected onto a recording medium from a recording head of an inkjet recording apparatus to form an image on the recording medium. The recording medium on which an image is to be formed with the ink according to this embodiment is a recording medium that is formed of fiber such as a cellulose fiber and has ink permeability. Examples of such a recording medium include plain paper, copy paper, recycled paper, thin paper, and thick paper.

The ink according to this embodiment is designed such that the pigment is less likely to agglomerate in the solvent during preservation and becomes more likely to agglomerate on a recording medium when the ink impacts on the recording medium and the concentration of hydrophobic solvent increases due to drying. As a result, the ink according to this embodiment is capable of improving the image density of the image formed on the recording medium by remaining on the surface without penetrating into the fiber forming the recording medium, while ensuring high preservation stability. That is, in the ink according to this embodiment, it is possible to achieve both image density and preservation stability.

### (Hydrophobic solvent)

In the ink according to this embodiment, a hydrophobic solvent that is a water-soluble organic solvent having an octanol/water partition coefficient (hereinafter, also referred to simply as a Log P) of 0.03 or more and 0.51 or less is used. In the ink according to this embodiment, by setting the Log P of the hydrophobic solvent to 0.03 or more, hydrophobicity increases due to drying on the recording medium, thereby easily achieving high agglomeration of pigments. Further, in the ink according to this embodiment, by setting the Log P of the hydrophobic solvent to 0.51 or less, high dispersibility of the pigment in the solvent can be easily achieved. Note that in this embodiment, for water-soluble organic solvents for which literature values can be acquired, the literature values are used as the Log P values. For water-soluble organic solvents for which literature values cannot be acquired, values calculated using calculation software (e.g., "ChemDraw" manufactured by PerkinElmer, inc.) can be used as the Log P values.

The hydrophobic solvent blended in the ink according to this embodiment favorably includes at least one of triethylene glycol monobutyl ether (Log P: 0.44) or 3-methyl-1,5-pentanediol (Log P: 0.35). In the ink according to this embodiment, the content of the hydrophobic solvent is 10 mass% or more and 30 mass% or less, favorably 20 mass% or more and 30 mass% or less. In the ink according to this embodiment, by setting the content of the hydrophobic solvent to 10 mass% or more, hydrophobicity increases due to drying on the recording medium, thereby easily achieving high agglomeration of pigments. Further, in the ink according to this embodiment, by setting the content of the hydrophobic solvent to 30 mass% or less, high dispersibility of the pigment in the solvent can be easily achieved. Note that in the ink according to this embodiment, in the case where a plurality of types of hydrophobic solvents is included, the total content of the plurality of types of hydrophobic solvents is used as the content of the hydrophobic solvent.

### (Pigment)

In the ink according to this embodiment, for example, a yellow pigment, an orange pigment, a red pigment, a blue pigment, a purple pigment, or a black pigment can be used as the pigment. Examples of the yellow pigment include C.I. Pigment Yellow 74, 93, 95, 109, 110, 120, 128, 138, 139, 151, 154, 155, 173, 180, 185, or 193. Examples of the orange pigment include C.I. Pigment Orange 34, 36, 43, 61, 63, or 71. Examples of the red pigment include C.I. Pigment Red 122 or 202. Examples of the blue pigment include C.I. Pigment Blue 15 or 15:3. Examples of the purple pigment include C.I. Pigment Violet 19, 23, or 33. Examples of the black pigment include C.I. Pigment Black 7. In the ink according to this embodiment, the content of the pigment is favorably 3.0 mass% or more and 20.0 mass% or less, more favorably 7.0 mass% or more and 12.0 mass% or less.

### (Pigment coating resin)

In the ink according to this embodiment, a pigment coating resin for enhancing the dispersibility of the pigment in the solvent is blended. The pigment coating resin is fine particles of a resin and suppresses the agglomeration of the pigment by being adsorbed on the surface of the pigment. In the ink in which the pigment coating resin is blended, the pigment and the pigment coating resin integrally form a pigment dispersion. The pigment dispersion includes, for example, a core that includes a pigment and a pigment coating resin that coats the core. The pigment coating resin may be partially dispersed in the solvent without being adsorbed on the surface of the pigment.

As the pigment coating resin, a known pigment coating resin can be appropriately selected and used. The pigment coating resin may be a random polymer or a block polymer. Specific examples of the pigment coating resin include polyester, polyurethane, (meth)acrylic acid, a styrene-(meth)acrylic acid copolymer, a styrene-maleic acid copolymer, a styrene-maleic acid half ester copolymer, a vinyl naphthalene-(meth)acrylic acid copolymer, and a vinyl naphthalene-maleic acid copolymer. The styrene-(meth)acrylic acid copolymer is a resin including a unit derived from styrene and a unit derived from (meth)acrylic acid, (meth)acrylic acid ester, or methacrylic acid ester. Examples of the styrene-(meth)acrylic acid copolymer include a styrene-(meth)acrylic acid-(meth)acrylic acid alkyl ester copolymer, a styrene-methacrylic acid-methacrylic acid alkyl ester-(meth)acrylic acid alkyl ester copolymer, a styrene-(meth)acrylic acid copolymer, a styrene-maleic acid-(meth)acrylic acid alkyl ester copolymer, a styrene-methacrylic acid copolymer, and a styrene-methacrylic acid alkyl ester copolymer. Of these pigment coating resins, a styrene-(meth)acrylic acid copolymer is favorable, and a styrene-methacrylic acid-methacrylic acid alkyl ester-(meth)acrylic acid alkyl ester copolymer is more favorable, and a styrene-methacrylic acid-methyl methacrylate-butyl (meth)acrylate copolymer is still more favorable, because it is easy to prepare and has an excellent dispersion effect of the pigment.

The pigment coating resin favorably has a neutralization rate of 20% or more and 100% or less, more favorably 30% or more and 60% or less. Note that the neutralization rate of the pigment coating resin is obtained as the percentage (100 × (MB / MA)) of the usage amount MB to the theoretical value MA, MA indicating the theoretical value of the amount of the basic compound necessary for completely neutralizing the pigment coating resin, MB indicating the usage amount of the actual basic compound used in the dispersion process.

The pigment coating resin favorably has an acid value of 50 mg KOH/g or more and 300 mg KOH/g or less, more favorably 75 mg KOH/g or more and 275 mg KOH/g or less. By setting the acid value of the pigment coating resin to 50 mg KOH/g or more, crosslinking with a crosslinking agent described below can be easily performed. By setting the acid value of the pigment coating resin to 300 mg KOH/g or less, it is possible to achieve high preservation stability of the ink according to this embodiment. Note that the acid value of the pigment coating resin can be obtained by measurement according to JIS K 0070: 1992 (Test methods for acid value, saponification value, ester value, iodine value, hydroxyl value and unsaponifiable matter of chemical products).

The pigment coating resin favorably has a mass average molecular weight (Mw) of 3000 or more and 180000 or less, more favorably 5000 or more and 15000 or less. By setting the mass average molecular weight of the pigment coating resin within this range, the efficiency of coating the surface of the pigment is improved, and the pigment dispersion liquid and the ink are easily maintained at appropriate viscosity. The mass average molecular weight of the pigment coating resin is obtained by measurement using gel permeation chromatography ("HLC-8020GPC" manufactured by TOSOH CORPORATION) in accordance with the following conditions.
Column: "TSKgel SuperMultiporeHZ-H" (semi-microcolumn of 4.6 mm I.D. × 15 cm) manufactured by TOSOH CORPORATION
Number of columns: 3
Eluent: tetrahydrofuran
Flow rate: 0.35 mL/min
Sample injection amount: 10 µL
Measurement temperature: 40°C
Detector: IR detector

Note that the calibration curve is created by selecting seven types, i.e., F-40, F-20, F-4, F-1, A-5000, A-2500, and A-1000, and n-propylbenzene from TSK gel standard polystyrene manufactured by TOSOH CORPORATION.

In the ink according to this embodiment, the ratio of the content of the pigment coating resin to the content of the pigment is 8.0 mass% or more and 12 mass% or less. In the ink according to this embodiment, by setting the ratio of the content of the pigment coating resin to the content of the pigment to 8.0 mass% or more, high dispersibility of the pigment in the solvent can be easily achieved. Further, in the ink according to this embodiment, by setting the ratio of the content of the pigment coating resin to the content of the pigment to 12 mass% or less, high agglomeration of pigments on the recording medium can be easily achieved.

The ink according to this embodiment is designed such that the pigment dispersion that includes the pigment and the pigment coating resin easily agglomerates in a hydrophobic environment assuming a state where drying has progressed on the recording medium. Specifically, the ink is diluted 100-fold by mass with a hydrophobic solvent-rich mixed solution of 50 parts by mass of the hydrophobic solvent and 50 parts by mass of water, thereby creating a hydrophobic environment surrounding the pigment dispersion included in the ink. The ink according to this embodiment is designed such that the pigment dispersion in this hydrophobic environment has an average particle diameter of 618 nm or more. Further, the ink according to this embodiment is favorably designed such that the pigment dispersion in this hydrophobic environment has an average particle diameter of 716 nm or less.

In the ink according to this embodiment, by setting the average particle diameter of the pigment dispersion in the hydrophobic environment to 618 nm or more, due to the agglomeration of the pigment dispersion caused by drying on the recording medium, the pigment dispersion cannot penetrate into the fiber forming the recording medium together with the solvent and remains on the surface of the fiber. As a result, in the ink according to this embodiment, the amount of pigments that can be viewed in the image formed on the recording medium increases, and therefore, an image with high image density can be formed. The average particle diameter of the pigment dispersion can be measured as a cumulant diameter using a multi-sample nanoparticle size measurement system "nanoSAQLA" manufactured by OTSUKA ELECTRONICS CO., LTD.

In the ink that includes a plurality of types of hydrophobic solvents having a Log P of 0.03 or more and 0.51 or less, a hydrophobic solvent that includes a plurality of types of hydrophobic solvents at the same ratio as that in the ink is used when preparing a mixed solution. For example, in the case of an ink including 5 mass% of a hydrophobic solvent p, 12 mass% of a hydrophobic solvent q, and 1 mass% of a hydrophobic solvent r, a mixed hydrophobic solvent obtained by mixing 5 mass% of the hydrophobic solvent p, 12 mass% of the hydrophobic solvent q, and 1 mass% of the hydrophobic solvent r is prepared, and 50 parts by mass of the mixed hydrophobic solvent and 50 parts by mass of water are mixed to prepare a mixed solution.

### (Water)

In the ink according to this embodiment, ion exchanged water, purified water, distilled water, or the like can be used as water. In the ink according to this embodiment, the content of water is favorably 25.0 mass% or more and 80.0 mass% or less, more favorably 35.0 mass% or more and 60.0 mass% or less, from the viewpoints of dryness and ejection reliability.

### (Other components)

In the ink according to this embodiment, components other than the above may be blended as necessary. For example, in the ink according to this embodiment, a surfactant may be blended. The surfactant has the effect of enhancing the permeability (wettability) of the ink according to the present disclosure into the recording medium. Examples of the surfactant that can be used in the ink according to this embodiment include an anionic surfactant, a cationic surfactant, and a nonionic surfactant. As the surfactant, a nonionic surfactant is favorable. Examples of the nonionic surfactant include polyoxyethylene dodecylether, polyoxyethylene hexadecylether, polyoxyethylene nonylphenylether, polyoxyethylene sorbitan monooleate, monodecanoyl sucrose, and an ethylene oxide adduct of acetylene glycol. As the nonionic surfactant, an ethylene oxide adduct of acetylene glycol is favorable.

Further, in addition to the surfactant, various additives such as a dissolution stabilizer, an antioxidant, a viscosity adjustor, a pH adjuster, and an antifungal agent may be blended as necessary in the ink according to this embodiment.

### [Examples and Comparative Examples]

As Examples and Comparative Examples of the present disclosure, inks were prepared and evaluated. Note that the following Examples are merely examples of the present disclosure, and the configuration of the present disclosure is not limited to those in Examples.

### (Preparation of pigment coating resin)

As a pigment coating resin used in the inks according to Examples and Comparative Examples, a methacrylic acid-methyl methacrylate-butyl acrylatestyrene copolymer was prepared. First, a stirrer, a nitrogen introduction tube, a condenser, and a dropping funnel were set in a four-necked flask. Next, 100 parts by mass of isopropyl alcohol and 300 parts by mass of methyl ethyl ketone were added to the flask. The content of the flask was heated at 70°C to reflux while bubbling nitrogen therein.

Next, a solution L1 was prepared. First, 50 parts by mass of styrene, 10.0 parts by mass of methacrylic acid, 30.0 parts by mass of methyl methacrylate, 10.0 parts by mass of butyl acrylate, and 0.4 parts by mass of azobisisobutyronitrile (AIBN, a polymerization initiator) were mixed to obtain the solution L1 that is a monomer solution. While the content of the flask was heated at 70°C to reflux, the solution L1 was added dropwise into the flask over 2 hours. After the dropping, the content of the flask was heated at 70°C to reflux for another 6 hours.

Next, a solution L2 was prepared. First, 0.2 parts by mass of AIBN and 150.0 parts by mass of methyl ethyl ketone were mixed to obtain the solution L2. The solution L2 was added dropwise into the flask over 15 minutes. After the dropping, the content of the flask was heated at 70°C to reflux for another 5 hours. In this way, a pigment coating resin (styrene-(meth)acrylic resin) was obtained.

After that, while heating the pigment coating resin in a warm bath at 70°C, an aqueous sodium hydroxide solution in an amount necessary for neutralizing the pigment coating resin was added to the pigment coating resin. More specifically, an aqueous sodium hydroxide solution in an amount 1.1 times by mass of the neutralization equivalent was added to the pigment coating resin. In this way, an aqueous solution of the pigment coating resin neutralized with sodium hydroxide was obtained. The obtained aqueous solution of the pigment coating resin had a pH of 8.

### (Preparation of pigment dispersion liquid)

Pigment dispersion liquids b1 to b5 used for the preparation of the inks according to Examples and Comparative Examples were prepared.

### ·Pigment dispersion liquids b1 to b4

A pigment (carbon black "MONARCH 800" manufactured by CABOT), the pigment coating resin, and water (the total amount of water contained in the aqueous sodium hydroxide solution used for neutralizing the pigment coating resin, water generated during the neutralization reaction, and newly added water) were mixed such that the blending amount shown in Table 1 was achieved, preliminary dispersion was performed using a dispersion device, and then, final dispersion was performed using a bead mill until the average particle diameter reached 100 nm, thereby obtaining pigment dispersion liquids b1 to b4. Table also shows the mass ratio of the content of the pigment coating resin to the content of the pigment in the pigment dispersion liquids b1 to b4.

**(Table 1)**

| Pigment dispersion liquid | Pigment (mass%) | Resin (mass%) | Water (mass%) | Resin/ Pigment (mass%) |
|---|---|---|---|---|
| b1 | 18.4 | 1.6 | 80 | 8.70 |
| b2 | 18.0 | 2.0 | 80 | 11.1 |
| b3 | 17.6 | 2.4 | 80 | 13.6 |
| b4 | 18.6 | 1.4 | 80 | 7.53 |

Note that in the pigment dispersion liquid b4, the average particle diameter of the pigment dispersion did not reach 100 nm. This is presumably because in the pigment dispersion liquid b4 in which the ratio of the content of the pigment coating resin to the content of the pigment is less than 8.0 mass%, the degree of pigment coating was insufficient. For this reason, the preparation and evaluation of the ink using the pigment dispersion liquid b4 were not performed.

### ·Pigment dispersion liquid b5

100 g of a pigment (carbon black "MONARCH 800" manufactured by CABOT) was added to 3,000 mL of a 2.5 N (normality) sodium hypochlorite aqueous solution to obtain a dispersion liquid. The obtained dispersion liquid was caused to react (oxidation treatment) for 12 hours while stirring at a temperature of 60°C and a speed of 300 rpm, thereby adding a carboxy group to the surface of the carbon black. In this way, a dispersion liquid including the carbon black (oxidized carbon black) having a carboxy group on its surface was obtained. This dispersion liquid was filtered to separate the oxidized carbon black. 100 mL of an aqueous sodium hydroxide solution (0.5 mol) was added to the separated oxidized carbon black for neutralization to obtain a mixed solution. Next, ultrafiltration was performed on the obtained mixed solution to obtain a dispersion liquid including the neutralized oxidized carbon black (self-dispersing black pigment). Subsequently, ultrafiltration was further performed on the dispersion liquid including the self-dispersing black pigment using a dialysis membrane with ion exchanged water, and the water content was adjusted such that the solid content concentration was 20 mass% (water content of 80 mass%), thereby obtaining the pigment dispersion liquid b5. The self-dispersing black pigment had a volume median diameter (D50) of 100 nm.

### (Preparation of ink)

Inks according to Examples and Comparative Examples were prepared by adding a pigment dispersion liquid, a water-soluble organic solvent, a surfactant, and ion exchanged water to a container, stirring them, and filtering them using a filter (pore size: 5 µm). In the inks according to Examples and Comparative Examples, five types of water-soluble organic solvents shown in Table 2 were used as the water-soluble organic solvent. All of the water-soluble organic solvents shown in Table 2 are manufactured by Tokyo Chemical Industry Co., Ltd. Table 2 also shows the Log P of each water-soluble organic solvent. Of the water-soluble organic solvents shown in Table 2, triethylene glycol monobutyl ether (BTG) and 3-methyl-1,5-pentanediol (MPD) each correspond to the hydrophobic solvent having a Log P of 0.03 or more and 0.51 or less. Further, in all of the inks according to Examples and Comparative Examples, "SURFYNOL (registered trademark) 420" manufactured by Nissin Chemical Co., Ltd. was used as the surfactant.

**(Table 2)**

| Type | LogP |
|---|---|
| Triethylene glycol monobutyl ether(BTG) | 0.51 |
| 3-methyl-1,5-pentanediol(MPD) | 0.03 |
| 1,3-propanediol(1,3PD) | -0.71 |
| Glycerin(Gry) | -0.76 |
| 1,2-hexanediol(1,2HD) | 0.58 |

(Measurement of average particle diameter of pigment dispersion in hydrophobic environment)

The hydrophobic solvent used in each ink was prepared, and 50 parts by mass of the hydrophobic solvent and 50 parts by mass of water were mixed to prepare a mixed solution. A diluted solution was prepared by diluting each ink 100-fold by mass with the mixed solution. For each ink, the average particle diameter of the pigment dispersion in the diluted solution was measured using a multi-sample nanoparticle size measurement system "nanoSAQLA" manufactured by OTSUKA ELECTRONICS CO., LTD.

### (Evaluation of ink)

For the inks according to Examples and Comparative Examples, the image density and preservation stability were evaluated.

### ·Method of evaluating image density

For the evaluation of image density, a solid image was formed on a recording medium ("C2" manufactured by FUJIFILM Business Innovation Corp.) using an inkjet recording apparatus on which a 600 dpi recording head was mounted. The reflection density of the formed solid image was measured using a spectrodensitometer ("FD-5" manufactured by Konica Minolta, Inc.). For each ink, the reflection density was used as an evaluation value for image density. Using the evaluation value of each ink, evaluation was performed in accordance with the following criteria A and B. Inks with the evaluation of A for the image density are evaluated to "Pass", and inks with the evaluation of B are evaluated to "Fail".

| | |
|---|---|
| A (Good): | 1.20 or more |
| B (Poor): | less than 1.20 |

### ·Preservation stability

Each ink was placed in a sealed container. The above-mentioned container was placed in a constant-temperature chamber set to an internal temperature of 60°C and held for 4 weeks. For the inks in the container held for 4 weeks, whether or not it was gelled was determined. Each ink was evaluated in accordance with the following criteria A and B. Inks with the evaluation of A for preservation stability are evaluated to "Pass", and inks with the evaluation of B are evaluated to "Fail".

| | |
|---|---|
| A (Good): | Not gelled |
| B (Poor): | Gelled |

### (Examples 1 to 5)

The content of each of the pigment, the water-soluble organic solvent, the surfactant, and the ion exchanged water in the inks according to Examples 1 to 5 is shown in Table 3. Note that the units of the numerical values shown in Table 3 are "mass%".

**(Table 3)**

| | | Example | | | | |
|---|---|---|---|---|---|---|
| | | 1 | 2 | 3 | 4 | 5 |
| Pigment dispersion liquid | b1 | 40.0 | | 40.0 | 40.0 | 40.0 |
| | b2 | | 40.0 | | | |
| Water-soluble organic solvent | BTG | 10.0 | 10.0 | 5.0 | 30.0 | |
| | MPD | | | 5.0 | | 10.0 |
| | 1,3PD | 8.0 | 8.0 | 8.0 | 8.0 | 8.0 |
| | Gly | 4.0 | 4.0 | 4.0 | 4.0 | 4.0 |
| Surfactant | | 0.40 | 0.40 | 0.40 | 0.40 | 0.40 |
| Ion exchanged water | | 37.6 | 37.6 | 37.6 | 17.6 | 37.6 |

For the inks according to Examples 1 to 5, the average particle diameter of the pigment dispersion in the hydrophobic environment was measured, and the image density and preservation stability were evaluated. Table 4 shows the measurement results of the average particle diameter of the pigment dispersion in the hydrophobic environment, and the evaluation results of image density and preservation stability for the inks according to Examples 1 to 5. In all of the inks according to Examples 1 to 5, the average particle diameter of the pigment dispersion in the hydrophobic environment was 618 nm or more, and both the image density and the preservation stability were evaluated to "Pass".

**(Table 4)**

| Example | Average particle diameter (nm) | Image density | | Preservation stability |
|---|---|---|---|---|
| | | Evaluation value | Evaluation | Evaluation |
| 1 | 705 | 1.23 | A | A |
| 2 | 618 | 1.20 | A | A |
| 3 | 662 | 1.22 | A | A |
| 4 | 716 | 1.25 | A | A |
| 5 | 623 | 1.21 | A | A |

### (Comparative Examples 1 to 5)

The content of each of the pigment, the water-soluble organic solvent, the surfactant, and the ion exchanged water in the inks according to Comparative Examples 1 to 5 is shown in Table 5. Note that the units of the numerical values shown in Table 5 are "mass%".

**(Table 5)**

| | | Comparative Example | | | | |
|---|---|---|---|---|---|---|
| | | 1 | 2 | 3 | 4 | 5 |
| Pigment dispersion liquid | b1 | | | 40.0 | 40.0 | 40.0 |
| | b3 | 40.0 | | | | |
| | b5 | | 40.0 | | | |
| Water-soluble organic solvent | BTG | 10.0 | 10.0 | 8.0 | 32.0 | |
| | 1.3PD | 8.0 | 8.0 | 8.0 | 8.0 | 8.0 |
| | Gly | 4.0 | 4.0 | 4.0 | 4.0 | 4.0 |
| | 1,2HD | | | | | 10.0 |
| Surfactant | | 0.4 | 0.4 | 0.4 | 0.4 | 0.4 |
| Ion exchanged water | | 37.6 | 37.6 | 39.6 | 15.6 | 37.6 |

The ink according to Comparative Example 1 is different from the inks according to the above Examples in that the pigment dispersion liquid b3 in which the ratio of the content of the pigment coating resin to the content of the pigment exceeds 12.0 mass% is used. The ink according to Comparative Example 2 is different from the inks according to the above Examples in that the pigment dispersion liquid b5 in which no pigment coating resin is included is used. The ink according to Comparative Example 3 is different from the inks according to the above Examples in that the content of the hydrophobic solvent is less than 10 mass%. The ink according to Comparative Example 4 is different from the inks according to the above Examples in that the content of the hydrophobic solvent exceeds 30 mass%. The ink according to Comparative Example 5 is different from the inks according to the above Examples in that a hydrophobic solvent having a Log P of exceeding 0.51 is used.

For the inks according to Comparative Examples 1 to 5, the average particle diameter of the pigment dispersion in the hydrophobic environment was measured, and the image density and preservation stability were evaluated. Table 6 shows the measurement results of the average particle diameter of the pigment dispersion in the hydrophobic environment, and the evaluation results of image density and preservation stability for the inks according to Comparative Examples 1 to 5. In the ink according to Comparative Example 1, the average particle diameter of the pigment dispersion in the hydrophobic environment was less than 618 nm. In the inks according to Comparative Examples 1 and 3, the image density was evaluated to "Fail". In the inks according to Comparative Examples 2, 4, and 5, the preservation stability was evaluated to "Fail".

**(Table 6)**

| Comparative Example | Average particle diameter (nm) | Image density | | Preservation stability |
|---|---|---|---|---|
| | | Evaluation value | Evaluation | Evaluation |
| 1 | 572 | 1.15 | B | A |
| 2 | 772 | 1.26 | A | B |
| 3 | 698 | 1.16 | B | A |
| 4 | 724 | 1.25 | A | B |
| 5 | 791 | 1.28 | A | B |

## Claims

1. An inkjet ink, comprising:
a pigment;
a pigment coating resin;
a hydrophobic solvent having a Log P of 0.03 or more and 0.51 or less; and
water,
a ratio of a content of the pigment coating resin to a content of the pigment being 8.0 mass% or more and 12 mass% or less,
a content of the hydrophobic solvent being 10 mass% or more and 30 mass% or less, and
a pigment dispersion that includes the pigment and the pigment coating resin having an average particle diameter of 618 nm or more when diluted 100-fold by mass with a mixed solution of 50 parts by mass of the hydrophobic solvent and 50 parts by mass of water.

2. The inkjet ink according to claim 1, wherein
the hydrophobic solvent includes at least one of triethylene glycol monobutyl ether or 3-methyl-1,5-pentanediol.

3. The inkjet ink according to claim 1 or 2, wherein
the content of the hydrophobic solvent is 20 mass% or more and 30 mass% or less.
